# EUROPÄISCHE PATENTANMELDUNG

(11) **EP 2 019 238 A1**
(43) Veröffentlichungstag der Anmeldung: **28.01.2009**
(21) Anmeldenummer: 07014623.8
(22) Anmeldetag: 25.07.2007
(51) Int. Cl.: F16J 15/44, F01D 11/00

(54) **Anstreifschicht einer Wellendichtung und Verfahren zum Aufbringen einer Anstreifschicht**

(71) Anmelder: SIEMENS AKTIENGESELLSCHAFT, 80333 München (DE)
(72) Erfinder: Geist, Richard, 91207 Lauf (DE)

(57) **Zusammenfassung**

Die Erfindung betrifft eine Wellendichtung (1) zur Abdichtung eines Spalts zwischen einem drehbar gelagerten Rotor und einem stehenden Bauteil, wobei zumindest eine einem rotierenden Teil der Wellendichtung (1) gegenüberliegende Oberfläche (5) eines stehenden Teils der Wellendichtung (1) zumindest teilweise mit einer Anstreifschicht (6) versehen ist und ein Verfahren zum Aufbringen der Anstreifschicht (6). Herkömmliche Anstreifschichten (6) werden mittels Spritzverfahren, insbesondere mittels Flammspritzens oder Plasmaspritzens hergestellt. Die Erfindung schlägt das Aufbringen der Anstreifschicht (6) in galvanischer Weise vor.

## Beschreibung

Die Erfindung betrifft eine Wellendichtung zur Abdichtung eines Spalts zwischen einem drehbar gelagerten Rotor und einem stehenden Bauteil, wobei zumindest eine einem rotierendem Teil der Wellendichtung gegenüberliegende Oberfläche eines stehenden Teils der Wellendichtung zumindest teilweise mit einer Anstreifschicht versehen ist. Außerdem betrifft die Erfindung ein Verfahren zum Aufbringen einer Anstreifschicht auf eine Oberfläche eines stehenden Teils einer Wellendichtung, welche Oberfläche einem rotierenden Teil der Wellendichtung gegenüberliegend angeordnet ist.

Moderne Turbomaschinen, insbesondere Dampfturbinen und Gasturbinen, werden im Streben nach besseren Wirkungsgraden ständig optimiert. Zur Steigerung der Effizienz ist es unter anderem möglich, diejenigen Anteile des Kreislaufmediums zu verringern, die nicht unmittelbar an der Erzeugung technischer Arbeit beteiligt sind. Beispielsweise bei einer Dampfturbine ist es erforderlich, den Spalt zwischen dem drehbar gelagerten Rotor und dem Dampfturbinengehäuse mittels einer berührungslosen Wellendichtung abzudichten. Regelmäßig werden hierbei Dichtungen des Labyrinthtyps verwendet, wobei ineinander kämmende sich in Umfangsrichtung erstreckende Umlenkelemente für einen möglichst hohen Druckverlust, eines dieses Labyrinth axial durchströmenden Mediums sorgen. Daneben ist es üblich, mittels sogenannten Sperrdampfes gegenüber dem Prozessmedium einen Gegendruck zu erzeugen und bevor Dampf aus der Wellendichtung in die Umgebung austreten kann diesen gemeinsam mit der Umgebungsluft als so genannten Wrasendampf abzusaugen und anschließend dieses Gemisch wieder zu trennen. Auch innerhalb von Turbomaschinen kommen Labyrinthdichtungen zum Einsatz, beispielsweise an so genannten Ausgleichskolben oder auf von Deckplatten von Laufschaufeln gebildeten Deckbändern, welche eine Sekundärströmung zwischen dem Rotor und einer den Rotor umfassenden Gehäusewand verhindern sollen. Eine Erhöhung des Druckverlustes über die Wellendichtung und damit eine bessere Abdichtung bzw. eine Reduktion der benötigten Sperrdampfmenge bzw. des anfallenden Wrasendampfes bzw. eine Reduktion der Sekundärströmung ist erreichbar, indem das Spiel zwischen dem stehenden Teil der Wellendichtung und dem drehenden Teil der Wellendichtung auf ein Minimum reduziert wird. Da moderne Turbomaschinen, insbesondere Dampfturbinen und Gasturbinen mit sehr heißen Prozessmedien arbeiten, kommt es insbesondere bei nicht stationären Vorgängen mit hohen Temperaturgradienten und -Transienten zu unterschiedlichen Ausdehnungen zwischen dem Rotor und dem umgebenden Gehäuse, sowohl radial als auch axial. Einer Verringerung des insbesondere radialen Spiels zwischen dem drehenden Teil und dem stehenden Teil einer Wellendichtung sind daher Grenzen gesetzt. Da es schwierig ist, sämtliche nicht stationären Betriebszustände eines Turbosatzes vorherzusehen, ist es außerdem schwierig diese Grenzen eindeutig zu definieren. Erschwerend kommt hinzu, dass einschlägige Turbosätze, insbesondere beim Durchlaufen von Schwingungsresonanzen während des Anfahrens auf Nenndrehzahl, Schwingungen mit von vielen Einflussfaktoren abhängigen Amplituden erfahren, welche bei unzureichender Spieldimension eine die Sicherheit eines Turbosatzes beeinträchtigende Spielüberbrückung verursachen können. Auch ist die Ausrichtung von Turbosätzen stets mit kleinen Unsicherheiten behaftet, möchte man den Aufwand auf der Baustelle in vertretbaren Grenzen halten. All diese Faktoren führen dazu, dass bei Turbosätzen moderner Bauweise häufig so genannte Anstreifschicht im Bereich von Wellendichtungen, insbesondere auf eine Oberfläche des stehenden Teils der Wellendichtung, die dem rotierenden Teil gegenüber liegt, aufgebracht werden und die Labyrinthspitzen sich während des Betriebs sich in die Anstreifschicht einarbeitet und auf diese Weise das minimale benötigte Spiel von dem Rotor selbst erzeugt wird.

Das Aufbringen der verschiedenen Anstreifschicht erfolgt bisher regelmäßig mittels Flammspritzens oder Plasmaspritzens. Hierbei erfolgt der Auftrag einer pulverförmigen Spritzsubstanz (z.B. Betonit) unter verhältnismäßig hoher Geschwindigkeit (Hochgeschwindigkeitsflammspritzen) und/oder hoher Temperatur (Plasmaspritzen, wobei anschließend an das Flammspritzen auch teilweise Wärmebehandlungen zur Veränderung der Schichteigenschaften durchgeführt werden. Die verschiedenen Verfahren des Flammspritzens erfordern eine sehr aufwendige Technologie und umfassende Kenntnisse, so dass nur spezialisierte Betriebe in der Lage sind, die geforderten Qualitäten zu erreichen. Dieser Umstand macht die verwendete Technologie teuer und zeitaufwendig. Ein weiterer Nachteil des Flammspritzverfahrens ist die erforderliche Nacharbeit der Schicht, um die Maßhaltigkeit der Dichtflächen zu gewährleisten, da die Betriebssicherheit der Dicke der im Betrieb abzutragenden Übermaße der Anstreifschicht Grenzen setzt.

Ausgehend von dem beschriebenen Problemen des Standes der Technik hat es sich die Erfindung zur Aufgabe gemacht, eine Wellendichtung mit einer Anstreifschicht zu schaffen, welche den betrieblichen Anforderungen genügt und weniger aufwendig herstellbar ist.

Zur Lösung der Aufgabe wird erfindungsgemäß vorgeschlagen, die Anstreifschicht der Wellendichtung als eine galvanisch aufgebrachte Schicht auszuführen.

Ein entscheidender Vorteil der galvanischen Anstreifschicht besteht in der größeren Bindefestigkeit weicher Anstreifschichten. Es handelt sich hierbei um einen einfachen und sicheren Herstellungsprozess der keinerlei Nacharbeit der Schicht erforderlich macht, weil galvanisch eine gleichmäßige Schichtdicke erzielbar ist. Daneben existiert eine große Auswahl an Materialien für die Beschichtung. Das Verfahren ist aufgrund seiner Einfachheit äußerst kostengünstig. Als bevorzugte Beschichtungsmaterialen kommen sämtliche galvanisierbare Metalle infrage, die weicher sind als das Material der sich drehenden Labyrinthspitze der Wellendichtung. Insbesondere Nickel, Kupfer, Aluminium oder Zink sowie deren Legierungen sind für die erfindungsgemäße Wellendichtung bzw. das erfindungsgemäße Verfahren geeignet. Außerdem können verschiedene Metallmischungen bzw. Metalcompounde, die galvanisierbar sind, eingesetzt werden.

Im Folgenden ist die Erfindung anhand eines speziellen Ausführungsbeispiels unter Bezugsnahme auf eine Zeichnung zur Verdeutlichung näher beschrieben. Es zeigt:

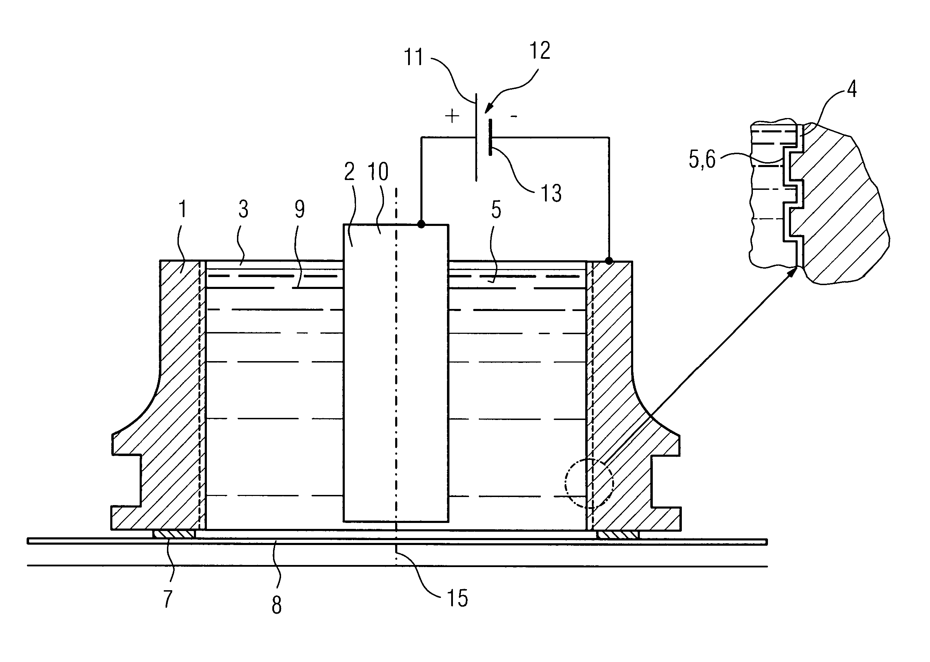

- FIG 1: die Anwendung des erfindungsgemäßen Verfahrens an einer erfindungsgemäßen Wellendichtung.

FIG 1 zeigt eine erfindungsgemäße Wellendichtung 1 zur Abdichtung eines Spalts zwischen einem stehenden Bauteil und einem Rotor, der sich um eine Längsachse 15 dreht, wobei weder der Rotor noch das mit dem stehenden Teil der Wellendichtung 1 in Verbindung stehende Bauteil gezeigt sind.

Der gezeigte stehende Teil der Wellendichtung 1 ist im Wesentlichen zylinderförmig und weist auf seiner Innenseite 3 eine Vielzahl an sich in Umfangsrichtung erstreckenden Nuten 4 auf, die im Zusammenwirken mit vorstehenden Stegen des nicht dargestellten Rotors ein sogenannten Komm-Nut-Labyrinth bilden. Die Oberfläche 5 auf der Innenseite 3 ist mit einer Anstreifschicht 6 versehen, die erfindungsgemäß galvanisch aufgebracht wurde. Das Verfahren zum Aufbringen der Anstreifschicht 6 kann derart erfolgen, dass die zylindrische Wellendichtung 1 unter Zwischenanordnung einer Dichtung 7 auf eine ebene Unterlage 8 gestellt wird, so dass die Dichtung 7 etwaige Spalte zwischen Unterlage 8 und der Stirnseite der Wellendichtung 1 gegen ein Austreten einer in das Innere der Wellendichtung 1 eingefüllte Elektrolytlösung 9 abdichtet. Zum Aufbringen der Anstreifschicht 6 bzw. zum eigentlichen Galvanisieren wird eine Anode 10 in die Elektrolytlösung 9 in die Wellendichtung 1 eingebracht und an einen Pluspol 11 einer Gleichspannungsquelle 12 angeschlossen. Der Minuspol 13 der Gleichspannungsquelle 12 wird elektrisch leitend mit der Wellendichtung 1 verbunden und nach einer bestimmten Zeit wird die Anstreifschicht 6 in gewünschter Dicke auf der Innenseite 3 der Wellendichtung 1 niederschlagen.

## Patentansprüche

1. Wellendichtung (1) zur Abdichtung eines Spalts zwischen einem drehbar gelagerten Rotor und einem stehenden Bauteil, insbesondere einem Gehäuse einer Turbomaschine, wobei zumindest einen einem rotierenden Teil der Wellendichtung (1) gegenüberliegende Oberfläche (5) des stehenden Teils der Wellendichtung (1) zumindest teilweise mit einer Anstreifschicht (6) versehen ist, **dadurch gekennzeichnet, dass** die Anstreifschicht (6) eine galvanisch aufgebaute Schicht ist.

2. Verfahren zum Aufbringen einer Anstreifschicht (6) auf eine Oberfläche (5) eines stehenden Teils einer Wellendichtung (1), welche Oberfläche (5) einem rotierenden Teil der Wellendichtung (1) gegenüber angeordnet ist, **gekennzeichnet durch** eine galvanische Aufbringung der Anstreifschicht (6).
